# EUROPEAN PATENT APPLICATION

(11) **EP 4 535 172 A1**
(43) Date of publication of application: **09.04.2025**
(21) Application number: 24202937.9
(22) Date of filing: 26.09.2024
(51) Int. Cl.: G06F 9/50, G06F 9/445, G06F 9/455, G06F 9/54, G06F 16/25, H04L 41/045, H04L 41/0803, H04L 41/0895, G06F 8/30, H04L 51/046

(54) **SCRIPT GENERATION FOR INTEGRATING FUNCTIONALITIES OF CLOUD-BASED AUTOMATION PLATFORMS**

(30) Priority: 29.09.2023 IN 202341065763; 18.09.2024 US 202418888362
(71) Applicant: VMware LLC, Palo Alto, CA 94304 (US)
(72) Inventor: Kolkar, Amit, 411007 Pune (IN); Devarakonda, Kalyan, 560076 Bangalore (IN); Sampangiramaiah, Murali, 560062 Bangalore (IN); Suparna, Adarsh, 560079 Bangalore (IN)
(74) Representative: Dilg, Haeusler, Schindelmann Patentanwaltsgesellschaft mbH

(57) **Abstract**

An example method may include executing, using an integration plugin installed on a first cloud-based automation platform running in a first management node, a schedule job to obtain an API response from a second management node executing a second cloud-based automation platform. The API response may include a custom form schema of a first form associated with the second cloud-based automation platform in a first defined data format. Further, the method may include parsing the custom form schema to determine form fields and dependency of the form fields. Furthermore, the method may include translating the custom form schema into a second defined data format supported by the first cloud-based automation platform based on the parsed custom form schema. Further, the method may include persisting the translated custom form schema in a database associated with the first cloud-based automation platform.

## Description

### TECHNICAL FIELD

The present disclosure relates to computing environments, and more particularly to methods, techniques, and systems for generating scripts for integrating functionalities of cloud-based automation platforms.

### BACKGROUND

Cloud service providers offering hybrid and/or multi-cloud services to customers have the challenge of providing orchestration of a vast number of legacy infrastructures of multiple customers and multi-cloud environments (e.g., Private/Public/Various brands GCP, AWS, Azure, VMware, OracleVM, and the like). Virtualization of computing infrastructures is a fundamental process that powers cloud computing in order to provide services to the customers requesting services on a cloud platform through a portal. However, when the features of the virtualization software are not well integrated with a services management unit of the cloud platform, the customers may not be able to access certain functionalities of the cloud platform, which can have a negative impact on the quality of the service provided by the cloud platform.

### BRIEF DESCRIPTION OF THE DRAWINGS

FIG. 1 is a block diagram of an example computing environment, depicting a management node to generate a script for integrating functionalities of a first cloud-based automation platform and a second cloud-based automation platform;
FIG. 2 is a block diagram of an example computing environment, depicting various components of a third-party application platform (e.g., a ServiceNow platform) to support functionalities of VMware vRealize^{®} Automation^{™} (vRA) through the third-party application platform;
FIG. 3 is a flow diagram illustrating an example method for generating a script for integrating functionalities of a first cloud-based automation platform and a second cloud-based automation platform;
FIG. 4 is a flow diagram illustrating another example method for generating a client script to support dependency of form fields for integrated cloud-based automation platforms;
FIG. 5 is an example table depicting a custom form field configuration and a dynamic nature support matrix;
FIG. 6A is an example graphical user interface depicting a constant value;
FIG. 6B is an example graphical user interface depicting a conditional value;
FIG. 6C is an example graphical user interface depicting an external source;
FIG. 6D is an example graphical user interface depicting a bind field;
FIG. 6E is an example graphical user interface depicting a computed value;
FIG. 7A shows an example visibility and read-write options on Aria Automation platform;
FIG. 7B shows an example simple conditional value type on Aria Automation platform;
FIG. 7C shows an example constraint on Aria Automation platform; and
FIG. 8 is a block diagram of an example management node including non-transitory computer-readable storage medium storing instructions to generate a script for integrating functionalities of a first cloud-based automation platform and a second cloud-based automation platform.

The drawings described herein are for illustrative purposes and are not intended to limit the scope of the present subject matter in any way.

### DETAILED DESCRIPTION

Examples described herein may provide an enhanced computer-based and/or network-based method, technique, and system to generate scripts for integrating functionalities of cloud-based automation platforms. Paragraphs [0019] to [0023] present an overview of a computing environment, existing methods to integrate functionalities of cloud-based automation platforms, and drawbacks associated with the existing methods.

The computing environment may be a virtual computing environment (e.g., a cloud computing environment, a virtualized environment, and the like). The virtual computing environment may be a pool or collection of cloud infrastructure resources designed for enterprise needs. The resources may be a processor (e.g., a central processing unit (CPU)), memory (e.g., random-access memory (RAM)), storage (e.g., disk space), and networking (e.g., bandwidth). Further, the virtual computing environment may be a virtual representation of the physical data center, complete with servers, storage clusters, and networking components, all of which may reside in virtual space being hosted by one or more physical data centers. The virtual computing environment may include multiple physical computers (e.g., servers) executing different computing-instances or workloads (e.g., virtual machines, containers, and the like). The workloads may execute different types of applications or software products. Thus, the computing environment may include multiple endpoints such as physical host computing systems, virtual machines, software defined data centers (SDDCs), containers, and/or the like.

An example of a cloud computing environment is VMware vSphere^{®}. The cloud computing environment may include one or more computing platforms (i.e., infrastructure automation platforms) that support the creation, deployment, and management of virtual machine-based cloud applications. One such platform is VMware Aria^{®} Automation^{™} (i.e., formerly known as vRealize Automation^{®}), which is commercially available from VMware. While the vRealize Automation^{®} is one example of a cloud deployment platform, it should be noted that any computing platform that supports the creation and deployment of virtualized cloud applications is within the scope of the present embodiment. In such virtual computing environments, the computing platform can be used to build and manage a multi-vendor cloud infrastructure.

As customers move towards leveraging public and private clouds for their workloads, it is increasingly difficult to deploy and manage them. Aspects such as cost analysis and monitoring may make it increasingly complex for the customers having a bigger scale. Infrastructure automation platforms such as VMware Aria^{®} Automation^{™} may help in solving these problems not just for provisioning but also for any Day-2 operations. However, customers using other third-party cloud-based platform's (e.g., ServiceNow, a cloud-based platform for automating IT management workflows) cloud management portal (CMP) may not be able to leverage said cloud management portal (CMP) to provision services via the infrastructure automation platform.

Some issues that inhibit the adoption of the infrastructure automation platform may include:
- While the infrastructure automation platform, such as VMware Aria^{®} Automation^{™}, may provide great and unique value propositions, customers may already have tools (e.g., ServiceNow) that are deployed for automating the information technology (IT) management workflows. This creates a barrier for greenfield customers to be able to adopt and switch over to the other infrastructure automation platforms.
- Some third-party cloud-based platforms may not have capabilities like VMware Aria^{®} Automation^{™}. However, by adding external components/plugins to such third-party cloud-based platforms, the capabilities/functionalities provided to the customers can be augmented to provide both VMware Aria^{®} Automation^{™} and the third-party cloud-based platform's capabilities/functionalities.

While some infrastructure automation platforms have application program interface (API) first approach, there is often no criteria defined on how the external third-party cloud-based platforms could be integrated with such infrastructure automation platforms for a better seamless experience for the customers.

With various native public clouds (NPCs) (e.g., Amazon Web Services (AWS), Microsoft Azure, Google Cloud Platform (GCP ), and the like) and private clouds (e.g., VMware vSphere), organisations may prefer to deploy and manage applications across various cloud vendors. However, this capability may need seamless interoperability across public and private cloud segments which otherwise would inhibit delivery. In some examples, VMware addresses this issue for customers through VMware vRealize^{®} Automation^{™} (vRA) (i.e., on-premises solution) and project Aria (i.e., Cloud offering). Aria Automation and vRA help customers in automating many day-to-day tasks and complex workflows that are otherwise manual in nature.

VMware Aria Automation's Service Broker includes catalog items to request for provisioning of machines and deployments. These catalog items can have properties on the form to take user input for further processing on the provisioned machine and deployments. These properties can have a default value, it can accept a user input, or it could have dependency on other property for its own value. For example, consider a form having two dropdown fields named 'state' and 'city'. Field `city' has a dependency on field `state' in such a way that depending upon what value is selected for a 'state' field, `city' field will get its own values. In other complex examples, the field can have multiple and multi-level dependencies too.

Thus, complex and nested dependencies between the catalog items/elements poses a challenge in customer adoption as organisations are used to employing a tool /framework or a third-party software for most of their day-to-day operations and may not like to transition to vRA specifically to handle multi-cloud configuration, templating, and deployment related use cases. This not only inhibits the customer growth but also reduces the pace of integration of vRA by customers. Therefore, it is critical to ensure that Aria Automation provides a strategy in resolving the dependencies between various catalog items for better, quicker, and seamless integration of vRA use cases programmatically into customer's software ecosystem.

Examples described herein may provide a management node comprising a first cloud-based automation platform (i.e., a third-party cloud-based platform) and an integration plugin installed on the first cloud-based automation platform to generate script for integrating functionalities of a second cloud-based automation platform (e.g., VMware Aria^{®} Automation^{™}). During operation, the integration plugin may execute a schedule job to obtain an application programming interface (API) response from a second cloud-based automation platform. The API response may include a custom form schema of a first form associated with the second cloud-based automation platform in a first data format.

Further, the integration plugin may parse the custom form schema to determine form fields and dependency of the form fields. Furthermore, the integration plugin may obtain information related to an appearance, a value related dependency, and a constraint related dependency of the form fields from the parsed custom form schema. For each form field, the integration plugin may generate a client script for the appearance, the value related dependency, the constraint related dependency, or any combination thereof. Further, the integration plugin may present, via a user interface associated with the first cloud-based automation platform, a second form by dynamically executing the client script associated with each form field in an event of loading the second form or a change of a value of a form field of the second form.

In the following description, for purposes of explanation, numerous specific details are set forth in order to provide a thorough understanding of the present techniques. However, the example apparatuses, devices, and systems, may be practiced without these specific details. Reference in the specification to "an example" or similar language means that a particular feature, structure, or characteristic described may be included in at least that one example but may not be in other examples.

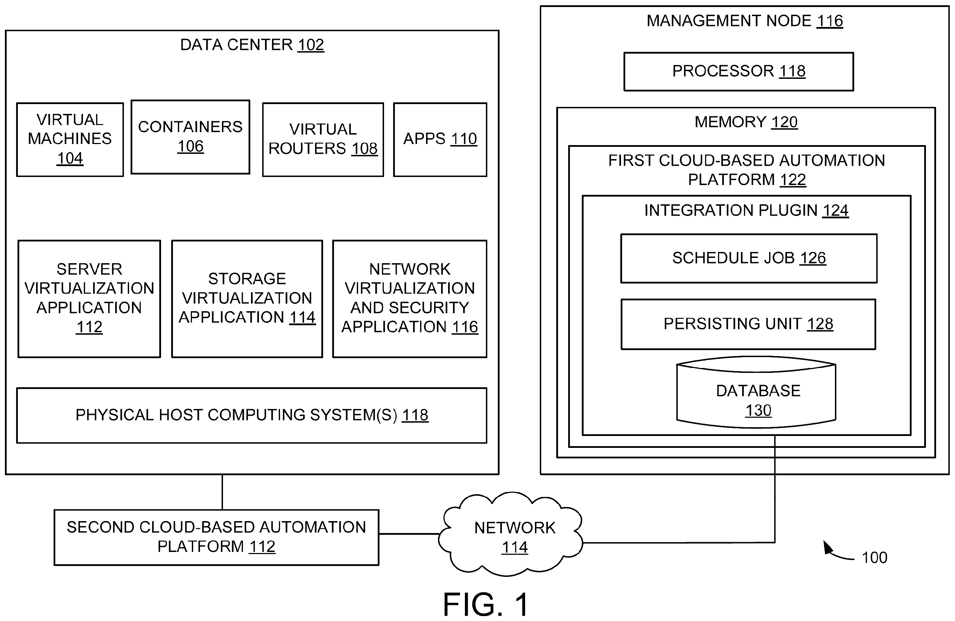

Referring now to the figures, FIG. 1 is a block diagram of an example computing environment 100, depicting a management node 116 to generate a script for integrating functionalities of a first cloud-based automation platform 122 and a second cloud-based automation platform 112. Computing environment 100 may be based on the deployment of physical resources across a network, virtualizing the physical resources into virtual resources, and provisioning the virtual resources in a data center 102 for use across cloud computing services and applications. Data center 102 may refer to a centralized physical facility where servers, network, storage, and other information technology equipment that support business operations exist. Further, components or resources in data center 102 include or facilitate business-critical applications, services, data, and the like.

For example, data center 102 may be a software-defined data center (SDDC) with hyperconverged infrastructure (HCl). In SDDC with hyper-converged infrastructure, networking, storage, processing, and security may be virtualized and delivered as a service. The hyper-converged infrastructure may combine a virtualization platform such as a hypervisor, virtualized software-defined storage, and virtualized networking in deployment of data center 102. For example, data center 102 may include different resources such as a server virtualization application 112 (e.g., vSphere of VMware^{®}), a storage virtualization application 114 (e.g., vSAN of VMware^{®}), a network virtualization and security application 116 (e.g., NSX of VMware^{®}), physical host computing systems 118 (e.g., ESXi servers), or any combination thereof.

Further, computing environment 100 may include second cloud-based automation platform 112 to deploy different resources and manage different workloads such as virtual machines 104, containers 106, virtual routers 108, applications 110, and the like in data center 102. Second cloud-based automation platform 112 may run in a compute node such as a physical server, virtual machine, or the like. Second cloud-based automation platform 112 may be deployed inside or outside data center 102 and responsible for managing a single data center or multiple data centers. Virtual machines 104, in some examples, may operate with their own guest operating systems on a physical computing device using resources of the physical computing device virtualized by virtualization software (e.g., a hypervisor, a virtual machine monitor, and the like). Containers 106 are data computer nodes that run on top of the host operating systems without the need for a hypervisor or separate operating system.

Second cloud-based automation platform 112 may be used for provisioning and configuring information technology (IT) resources and automating the delivery of container-based applications. An example of second cloud-based automation platform 112 may be VMware Aria^{®} Automation^{™} (formerly known as vRealize Automation^{®}), a modern infrastructure automation platform designed to help organizations deliver self-service and multi-cloud automation. The vRealize Automation^{®} may be a cloud management platform that can be used to build and manage a multi-vendor cloud infrastructure. The vRealize Automation^{®} provides a plurality of services that enable self-provisioning of virtual machines in private and public cloud environments, physical machines (install OEM images), applications, and IT services according to policies defined by administrators.

For example, the vRealize Automation^{®} may include a cloud assembly service to create and deploy machines, applications, and services to a cloud infrastructure, a code stream service to provide a continuous integration and delivery tool for software, and a broker service to provide a user interface to non-administrative users to develop and build templates for the cloud infrastructure when administrators do not need full access for building and developing such templates. The example vRealize Automation^{®} may include a plurality of other services, not described herein, to facilitate building and managing the multi-vendor cloud infrastructure. In some examples, the example vRealize Automation^{®} may be offered as an on-premise (e.g., on-prem) software solution wherein the vRealize Automation^{®} is provided to an example customer to run on the customer servers and customer hardware. In other examples, the example vRealize Automation^{®} may be offered as a Software as a Service (e.g., SaaS) wherein at least one instance of the vRealize Automation^{®} is deployed on a cloud provider (e.g., Amazon Web Services).

As shown in FIG. 1, data center 102 may be communicatively connected to management node 116 via network 114. For example, network 114 can be a managed Internet protocol (IP) network administered by a service provider. For example, network 114 may be implemented using wireless protocols and technologies, such as Wi-Fi, WiMAX, and the like. In other examples, network 114 can also be a packet-switched network such as a local area network, wide area network, metropolitan area network, Internet network, or other similar type of network environment. In yet other examples, network 114 may be a fixed wireless network, a wireless local area network (LAN), a wireless wide area network (WAN), a personal area network (PAN), a virtual private network (VPN), intranet or other suitable network system and includes equipment for receiving and transmitting signals.

Management node 116 may include a processor 118. Processor 118 may refer to, for example, a central processing unit (CPU), a semiconductor-based microprocessor, a digital signal processor (DSP) such as a digital image processing unit, or other hardware devices or processing elements suitable to retrieve and execute instructions stored in a storage medium, or suitable combinations thereof. Processor 118 may, for example, include single or multiple cores on a chip, multiple cores across multiple chips, multiple cores across multiple devices, or suitable combinations thereof. Processor 118 may be functional to fetch, decode, and execute instructions as described herein. Further, management node 116 includes memory 120 coupled to processor 118. Memory 120 includes first cloud-based automation platform 122 running therein.

For example, first cloud-based automation platform 122 may be ServiceNow or any other third-party cloud-based platform. For example, the ServiceNow is a cloud-based platform that is used for automating IT management workflows. The platform specializes in IT service management, IT operations management, and IT business management. After joining the technology partner program (TPP), every partner has two vendor instances provisioned for them. These are standard instances but have some special features and applications to specifically support ServiceNow Technology Partners. Vendor instance may be a node with dedicated resources and worker threads to serve the requests raised by logged in users in order to achieve the above-mentioned platform capabilities. Like most of the other cloud-based platforms, the ServiceNow provides a platform to integrate with third-party products to explore ServiceNow features through a ServiceNow plugin called Scoped Application. Such applications are developed by the third-party vendors (e.g., VMware) and certified by ServiceNow certification team.

Further, management node 116 may include an integration plugin 124 installed on first cloud-based automation platform 122. An example integration plugin 124 is a software add-on that is installed on first cloud-based automation platform 122, enhancing its capabilities. Further, second cloud-based automation platform 112 (i.e., integrated product) may provide first cloud-based automation platform's 122 (i.e., an integrating product's) integration plugin 124 that extends the integrated product's functionalities like provisioning and monitoring of the deployments and applications through the integrating product's cloud management portal. For example, VMware Aria^{®} Automation^{™} provides a ServiceNow integration plugin called "VMware Aria Automation Plugin" that extends the Aria Automation functionalities like provisioning and monitoring of the deployments and applications through the ServiceNow platform.

The Aria Automation plugin may not just extend the Aria Automation's provisioning functionality in the ServiceNow, but the plugin also makes use of ServiceNow's Out-Of-The-Box features like approval, incident management, email notifications, and the like. Similar to any other integration that replicates the functionality of one product into another, the plugin will be fetching inventory data from the integrated product into the integrating product. In the above example, the Aria Automation plugin on the ServiceNow may have to fetch the inventory data from the Aria^{®} Automation^{™} to make use of the same to replicate the functionality.

In an example, integration plugin 124 installed on first cloud-based automation platform 122 may be used to generating scripts for integrating functionalities of first cloud-based automation platform 122 and second cloud-based automation platform 112. During operation, integration plugin 124 may execute a schedule job to obtain an application programming interface (API) response from a second cloud-based automation platform. In an example, the API response may include a custom form schema of a first form associated with the second cloud-based automation platform in a first data format. Form Schema may be used for laying out user interface (Ul) components in an HTML form. Specifically, the form schema may allow cloud admins and developers to provide a UI for entering parameters when creating a new virtual computing instance, cloud deployment, and the like. A Service Catalog is a consumer-like UI for requesting services or products.

Further, integration plugin 124 may parse the custom form schema to determine form fields and dependency of the form fields. The form fields may refer to form elements designed for data input, data display, and/or the like in the custom form schema. Furthermore, integration plugin 124 may obtain information related to an appearance, a value related dependency, and a constraint related dependency of the form fields from the parsed custom form schema. For each form field, integration plugin 124 may generate a client script for the appearance, the value related dependency, the constraint related dependency, or any combination thereof. The client script may be used to alter data and\or the visibility of the data in the UI (e.g., browser). Client scripts may allow the system to run JavaScript on the client (e.g., Web browser) when client-based events occur, such as when a form loads, after form submission, when a field changes value, or the like. The client script may be used to configure forms, form fields, and field values while the user is using a second form.

As shown in FIG. 1, integration plugin 124 may include a persisting unit 128 to persist the client script associated with each form field in a database 130 associated with first cloud-based automation platform 122 by making a platform call that enables integration plugin 124 to interact with the database.

Further, integration plugin 124 may present, via a user interface associated with first cloud-based automation platform 122, the second form by dynamically executing the client script associated with each form field in an event of loading the second form or a change of a value of a form field of the second form.

In an example, in the event of loading the form field of the second form or a change of a value of the form field of the second form, integration plugin 124 may retrieve the client script associated with the form field from database 130. Further, integration plugin 124 may execute the retrieved client script to populate a default value in the form field, populate a value based on the value related dependency of the form field, apply a rule to the form field, or a combination thereof.

In an example, integration plugin 124 may:
- execute the client script for the appearance of the form field to provide an appearance of the form field in the second form,
- execute the client script for the value related dependency to populate a value in a first form field that is dependent on a second form field in an event of change of a value of the second form field or to populate a default value in the form field during loading of the form field,
- execute the client script for the constraint related dependency to apply a validation rule on the value provided in the form field, or
- any combination thereof.

As and when new features are supported by second cloud-based automation platform 112 (e.g., Aria^{®} Automation^{™}), integration plugin 124 also makes related changes to support the same functionality through first cloud-based automation platform 122 (e.g., ServiceNow). In some examples, the functionalities described in FIG. 1, in relation to instructions to implement functions of integration plugin 124 including schedule job 126 and persisting unit 128, and any additional instructions described herein in relation to the storage medium, may be implemented as engines or modules including any combination of hardware and programming to implement the functionalities of the modules or engines described herein. The functions of integration plugin 124 may also be implemented by a processor. In examples described herein, the processor may include, for example, one processor or multiple processors included in a single device or distributed across multiple devices.

Further, computing environment 100 illustrated in FIG. 1 is shown purely for purposes of illustration and is not intended to be in any way inclusive or limiting to the embodiments that are described herein. For example, a typical computing environment would include many more remote servers (e.g., physical host computing systems), which may be distributed over multiple data centers, which might include many other types of devices, such as switches, power supplies, cooling systems, environmental controls, and the like, which are not illustrated herein. It will be apparent to one of ordinary skill in the art that the example shown in FIG. 1, as well as all other figures in this disclosure have been simplified for ease of understanding and are not intended to be exhaustive or limiting to the scope of the idea.

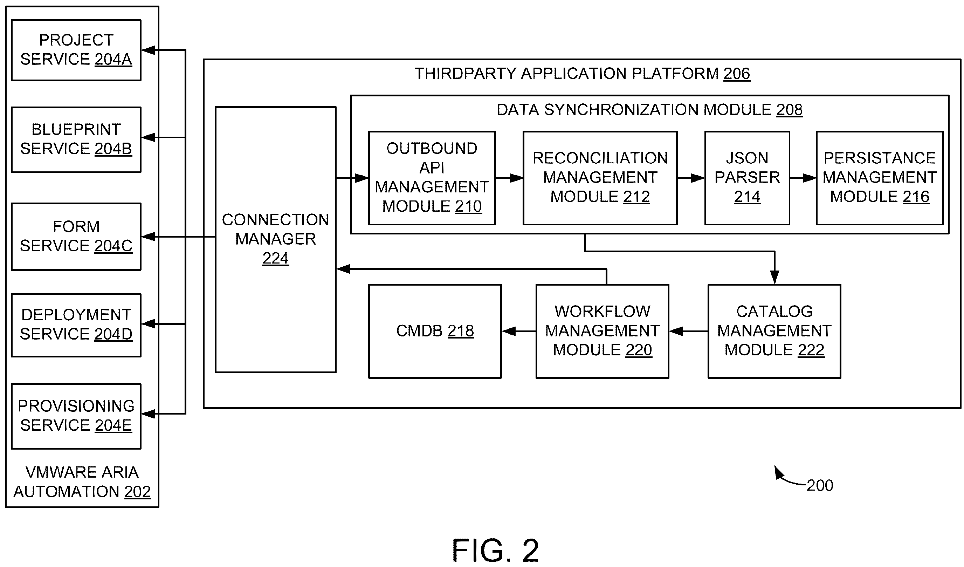

FIG. 2 is a block diagram of an example computing environment 200, depicting various components of a third-party application platform 206 (e.g., a ServiceNow platform) to support functionalities of VMware vRealize^{®} Automation^{™}(vRA) 202 through third-party application platform 206. vRA 202 may include an inventory item and/or its supporting schema from various services (e.g., project service 204A, blueprint service 204B, form service 204C, deployment service 204D, and provisioning service 204E) deployed. Further, third-party application platform 206 may include a connection manager 224 to communicatively connect to vRA 202.

In an example, third-party application platform 206 may include a data synchronization module 208, a configuration management database (CMDB) 218, a workflow management module 220, and a catalog management module 222. Further, data synchronization module 208 may include an outbound application programming interface (API) management module 210, a reconciliation management module 212, a JSON parser 214, and a persistence management module 216.

Data synchronization module 208 may be responsible for orchestrating the overall workflow that includes initiating a REST API call, processing the JSON response, and persisting the entities into the third-party system. Further, data synchronization module 208 may ensure an end-to-end lifecycle of data import into third party application 206. Further, catalog management module 222 may be a consumer of the data that is fetched, processed, and persisted by the data synchronization. Customers (e.g., including requests originating from Ul) interact with catalog management module 222 to fetch the data of vRA/Aria Automation 202 that is saved in a well-defined format that can be consumed by third-party application 206. Workflow management module 220 may create, document, monitor and improve upon the series of steps, or workflow, that is required to complete a specific task using the client scripts in third party application 206. Further, CMDB 218 may be a database that contains all relevant information about the hardware, IP components, and software components etc., used in an organization's IT services and it also contains the relationships between those components. In this way CMDB 218 may provide an organized view of configuration data so that the organization gains the full visibility of its infrastructure and services, leading to more control of organization environment and better decisions.

Outbound API management module 210 may be responsible for making REST API calls to Aria Automation 202 to fetch the custom form schema for all catalog items. Catalog items may refer to imported templates in the custom form schema that users can request for deployment. A Catalog item is a form element used to submit information, a request, or to create a task. Catalog items contain questions that gather information from users to create a record in a table. Custom form schema may include the required information about appearance, value, and constraint of the field including nested dependencies (if any) between the form fields. Reconciliation management module 212 may be, as part of day 2 operations, expected that catalog items (and therefore their info such as appearance, value, constraints, and the like) could change over a period of time. Therefore, the third-party system may be expected to keep this data in sync by constant replication. As part of it, when the catalog items are imported, reconciliation management module 212 takes care of the removal of either a whole catalog item or properties of the same if respective change is done at Aria Automation 202. Reconciliation management module 212 may also clean up catalog client scripts with every import cycle before auto generating the new ones depending upon the schema changes and to reflect the current and accurate behaviour on vRA 202.

Catalog parser/JSON parser 214 may make use of the custom form schema received from Aria Automation 202 to understand the variables and their dependencies. Once the schema is received, it validates to check on JSON keys to confirm if the dependencies are applicable on the field. Further, final outcome of JSON parser 214 may be given to persist management module 216 to create the entities that third-party application platform 206 would understand. For example, the entities may include 'Item Option New' for form variables and catalog client scripts for dependency resolution. Further, persistence management module 216 receives the parsed schema for a catalog item with all the variables and their respective dependencies. The job of persistence management module 216 may be to create the variables for the catalog item and generate the catalog client scripts for the dependencies programmatically.

Examples described herein may provide an approach in which, every third-party integration may present the catalog item form to the end user on a user interface (Ul) which usually have a capability of recording the form change events and allowing developers to introduce some interventions on the form depending upon such events. For example, if a field on the form changes its value, capture that change as an event and perform some set of validations on the changed value. With technologies like HTML and JavaScript, almost all integrations can follow the path mentioned in examples described herein and implement it in their integration. The example taken here is for ServiceNow integration which integrates with Aria Automation and implements the provisioning feature including support for dynamic dependency using generating scripts programmatically.

Platforms that follow the principle of "Low code No code" policy (e.g., ServiceNow) but still with simple JavaScript code, any integration plugin can get this functionality implemented. VMware Aria Automation REST APIs are data rich and provides all this information of dependencies in a JSON format. Third party plugin can do the parsing and understanding of the dependencies and have a complex logic to dynamically generate a code for scripts depending upon the kind of dependency. Some examples of dependency resolution that the third-party integration plugin can perform to support the functionality of Aria automation include:
- Dependency of one field on other for value.
- Dependency of a field to get its default value on load.
- Dependency of one field on other for visibility.
- Dependency of one field on other for making it read-only.
- Dependency of one field's mandatory nature on value of another field.
- Dependency of a field to get value from external source like vRO.
- RegEx validation on the value provided into the field.

Further, ServiceNow may present the catalog item form in its service catalog module. To handle the events happening on the form, ServiceNow may use the catalog client scripts. The catalog client scripts get triggers and executes corresponding JavaScript code snippet once the HTML rendering events like 'onchange', 'onload', or so on is emitted from the form. It is to be noted that this is specific to ServiceNow, but such events and triggers may be available for almost all the applications catering the catalog item form.

Further, the challenge for IT Service Management (ITSM) integration plugin (i.e., the third-party integration plugin) is to make use of these catalog client scripts dynamically for each dependency that a catalog item has on the custom form. ServiceNow catalog client script is, at the end, a record in a table inside ServiceNow database and hence can be created and manipulated programmatically. ServiceNow ITSM plugin initialises a record with important information like :
- Whether the script needs to run on load of the form or on change of value of some property on the form.
- On which field's change of value, this script may have to be invoked (if it is a 'onchange' script).
- What is the order of execution of this script.
- What script needs to be executed when this event occurs.

In an example, the above information may be available in the JSON schema received from VMware Aria Automation and plugin parses the JSON schema and creates catalog client scripts dynamically. Further, as and when new features are supported by VMware Aria Automation, ServiceNow plugin also makes related changes to support the same functionality through ServiceNow.

Examples described herein may be implemented in different use cases such as in ServiceNow ITSM, Catalog item, and Catalog client script. ServiceNow ITSM is VMware's integration plugin for ServiceNow that integrates with Aria automation to extend the provisioning and monitoring functionality into ServiceNow. This plugin also adds further ServiceNow functionalities on the top of Aria Automation feature to enhance the user experience. Catalog item may be a dedicated form to order/request a service. For example, a form may have fields with different datatype and size that either needs to be populated with user input or it gets the value automatically by itself or on the basis of value in some other field on the form. Catalog client script may be a script that a piece of code that runs on the form in the event of either loading of the form or on change of value of selected field on the form. For example, 'onload catalog' client script can be used to populate default values in the fields and 'onchange catalog' client script can be used to resolve the dependency of one field on other field's value change event.

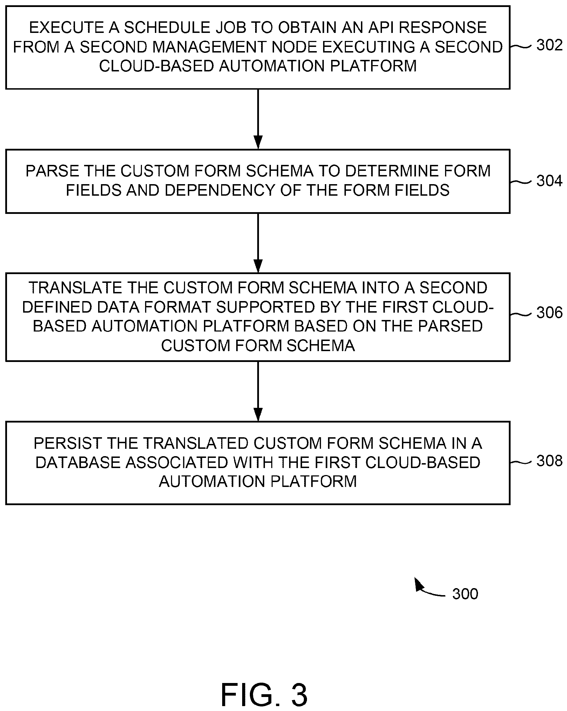

FIG. 3 is a flow diagram illustrating an example method 300 for generating a script for integrating functionalities of a first cloud-based automation platform and a second cloud-based automation platform. Example method 300 depicted in FIG. 3 represents generalized illustrations, and other processes may be added, or existing processes may be removed, modified, or rearranged without departing from the scope and spirit of the present application. In addition, method 300 may represent instructions stored on a computer-readable storage medium that, when executed, may cause a processor to respond, to perform actions, to change states, and/or to make decisions. Alternatively, method 300 may represent functions and/or actions performed by functionally equivalent circuits like analog circuits, digital signal processing circuits, application specific integrated circuits (ASICs), or other hardware components associated with the system. Furthermore, the flow chart is not intended to limit the implementation of the present application, but the flow chart illustrates functional information to design/fabricate circuits, generate computer-readable instructions, or use a combination of hardware and computer-readable instructions to perform the illustrated processes.

At 302, a schedule job may be executed, using an integration plugin installed on a first cloud-based automation platform running in a first management node, to obtain an application programming interface (API) response from a second management node executing a second cloud-based automation platform. In an example, the API response may include a custom form schema of a first form associated with the second cloud-based automation platform in a first defined data format. An example custom form schema may include information indicating an appearance of the fields on the form, value of the fields, constraint for the fields, and dependencies of the fields.

At 304, the custom form schema may be parsed, using the integration plugin, to determine form fields and dependency of the form fields. For example, the dependency of the form fields may include a dependency of one form field on another form field for a value, a dependency of a form field to get a default value on loading of the form field, a dependency of one form field on another form field for visibility, a dependency of one form field on another form field for making the form field read-only, a dependency of one form field's mandatory nature on a value of another form field, a dependency of a form field to get a value from an external source, or a validation on the value provided into the form field.

At 306, the custom form schema may be translated, using the integration plugin, into a second defined data format supported by the first cloud-based automation platform based on the parsed custom form schema. At 308, the translated custom form schema may be persisted, using the integration plugin, in a database associated with the first cloud-based automation platform.

Further, method 300 may include presenting, via a user interface associated with the first cloud-based automation platform, a second form using the persisted custom form schema in the second defined data format. In an example, the second form may provide a capability of recording a change event and trigger an action on the second form depending upon the change event based on the translated custom form schema.

Furthermore, method 300 may include enabling to perform the management functions of the second cloud-based automation platform through the first cloud-based automation platform using the second form. In an example, the second form may be used to submit information, a request, or to create a task corresponding to the second cloud-based automation platform.

In an example, translating the custom form schema into the second defined data format may include programmatically generating a client script for an appearance of a form field in the second form, a value related dependency of the form field in the second form, a constraint related dependency of the form field in the second form, or any combination thereof.

In another example, translating the custom form schema into the second defined data format may include programmatically generating a client script for an appearance of each form field. In this example, the client script, when executed, may provide an appearance of a form field in the second form.

In yet another example, translating the custom form schema into the second defined data format may include programmatically generating a client script for each dependency of the form field. In this example, the client script, when executed, may populate a value in a first form field that is dependent on a second form field in an event of change of a value of the second form field.

In another example, translating the custom form schema into the second defined data format may include programmatically generating a client script for each form field. In this example, the client script, when executed, may populate a default value in a form field in an event of loading of the second form.

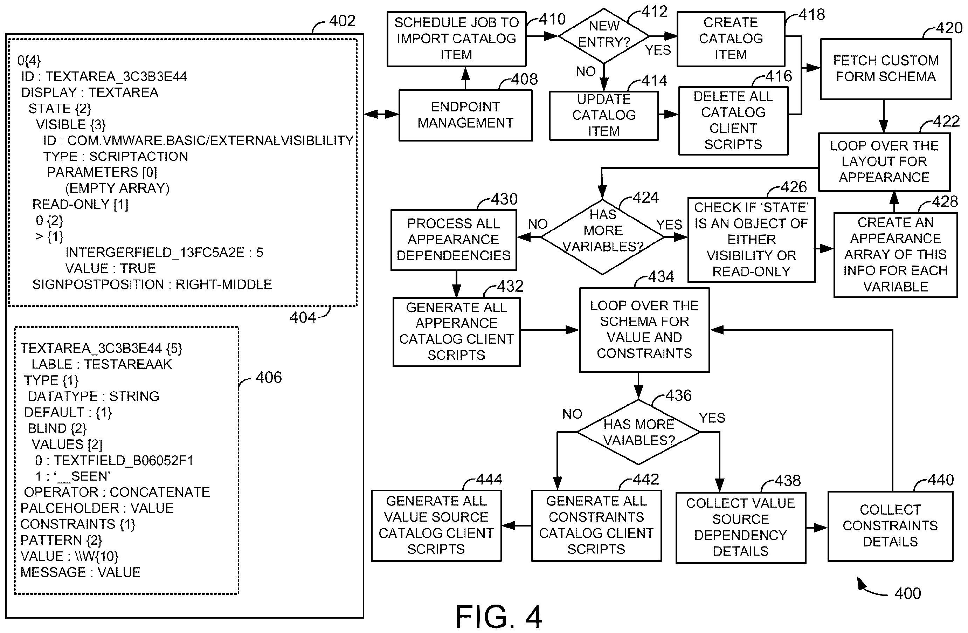

FIG. 4 is a flow diagram illustrating another example method 400 for generating a client script to support dependency of form fields for integrated cloud-based automation platforms. At 408, endpoint management may be used to communicatively connect to a second cloud-based automation platform. At 410, a scheduled job may be executed to import a catalog item from the second cloud-based automation platform to a first cloud-based automation platform.

For example, Aria Automation custom form field allows configuration in a layout (i.e., appearance), value, and constraints. An example appearance may be a property of a field on the form that decides whether a field would appear on the form, which may be editable. An example value source may be an approach with which a field gets its value on the form. The value source may be a constant or value depending upon some other field or fetched from an external source altogether. An example constraint may provide a restriction imposed on the value provided to the field on the form, for instance, whether the value needs to be validated with a regular expression (RegEx), if the value provided should be restricted to a minimum/maximum value, and the like. In this example, a custom form schema 402 including a form field 404 (e.g., for appearance) and a form field 406 (e.g., for value and constraint) may be received, via the endpoint management, by an integration plugin deployed in the first cloud-based automation platform.

At 412, a check may be made, by the integration plugin, to determine whether the form field is a new entry. When the form field is not a new entry, at 414, the catalog item may be updated. Further at 416, catalog client scripts associated with the catalog item may be deleted. When the form field is a new entry, at 418, a catalog item for the form field may be created. At 420, custom form schema 420 associated with the form field may be fetched. At 422, a loop over the layout for the appearance may be performed. At 424, a check may be made to determine whether there are more variables. When there are more variables, at 426, a check is made to determine if 'state' is an object of either visibility or read-only. At 428, an appearance array of this information (i.e., visibility or read-only variable) may be created for each variable. Further, step 422 may be executed.

When there are no more variables, at 430, all appearance dependencies of the variables (i.e., form fields) may be processed. At 432, catalog client scripts for all appearance form fields may be generated. The scripts may handle visibility and read-only behaviour of a field. At 434, a loop over the schema for value and constraints may be performed. At 436, a check may be made to determine whether there are more variables. When there are more variables, at 438, dependency details associated with the value form fields may be collected. Further at 440, constraints details such as a pattern, a minimum value, a maximum value, and so on associated with the value form fields may be collected. Furthermore, step 434 may be executed. When there are no variables, at 442, catalog client scripts for all the constraint form fields may be generated. The catalog client scripts, upon execution, may validate the value of the field against the regex, the minimum value, and the maximum value. Further at 444, catalog client scripts for all value form fields may be generated. The scripts, upon execution, may populate the value into the field.

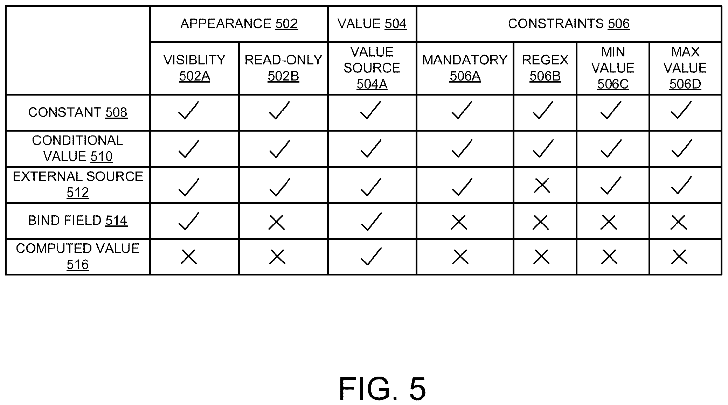

FIG. 5 is an example table depicting a custom form field configuration and a dynamic nature support matrix. In some examples, a cloud-based automation platform such as Aria automation may provide a multi-cloud platform for all types of provisioning and monitoring needs of cloud deployments and applications. These deployments can be provisioned by requesting a blueprint or a cloud template. Aria automation Cloud template possesses all the information of what needs to be provisioned and what all operations need to be performed after the provisioning is done. To provide further customization and flexibility, each cloud template has a custom form and its associated form fields. Each form field of the custom form can be different in its appearance on the form, the way it fetches the value on the form and the kind of constraints it would have on the value provided/fetched. In case if a user input needs to be taken, (i.e., the cloud template may have a custom form that can have different types of fields and properties to which an input can be defined as a default value), it can accept a user input directly or it could get a value depending upon the value present in another field.

In an example, Aria Automation's custom form field allows configuration in sections such as an appearance 502, a value 504, and constraints 506. The section appearance 502 may define the appearance of the field on the form. For example, if the field will be visible (e.g., 502A) on the form or if the field will be read only (e.g., 502B). The section value 504 defines how a value to the field will be set. For example, how the value of the field will be calculated/set. When the data type of the field is a drop down, how the other options in the drop down may be populated. The section constraints 506 may set some constraints/validation rules on the value provided to the field. For example, whether the field should be marked mandatory 506A, if the value needs to be validated with a RegEx 506B, or else if the provided value should be restricted within the boundary of minimum value 506C and maximum value 506D.

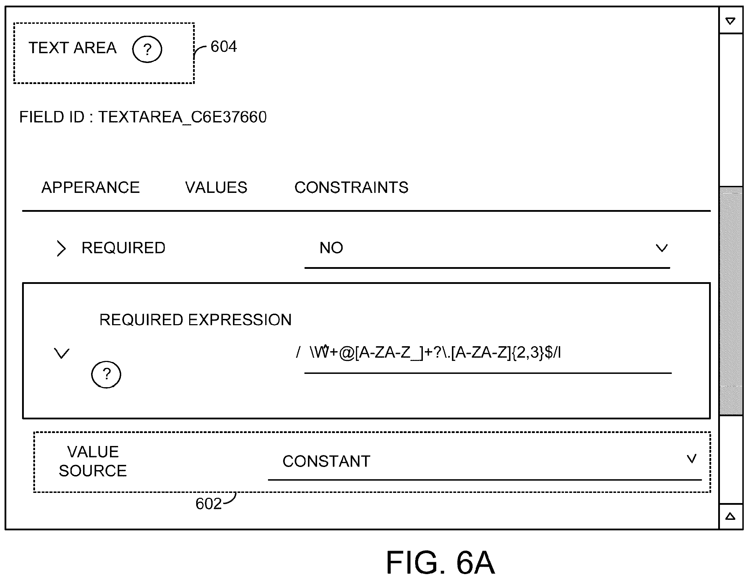

In an example, a custom form field can make use of supported features to inject dynamic nature in the way the above sections can operate. The supported features may be a constant 508, a conditional value 510, an external source 512, a bind field 514, and a computed value 516. Constant 508 may be a value either specified already or one can later specify on the form. Conditional value 510 may be a value based on a condition set on another field. For example, if there are multiple conditions set, the last condition in the list that matches may decide the value. External source 512 may be a value set as per the response received for an external call to vRO action. Bind field 514 clones the value from another field that is bound to this field. Computed value 516 may calculate the value on the basis of some basic operations such as concatenate for string and Add, Subtract and Multiply on Integer. The supported features are described with an example in FIGs. 6A to 6E.

FIG. 6A is an example graphical user interface 600A depicting a constant value (e.g., 602). In an example, the constant value may either be specified already while creating a custom form on Aria Automation or one can later specify on the form while requesting a catalog. Further, a field 'text area' 604 may validate the provided value with the predefined constant RegEx.

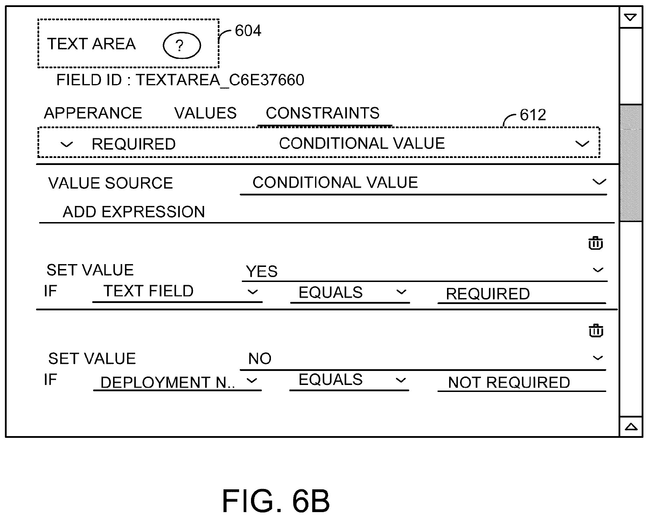

FIG. 6B is an example graphical user interface 600B depicting a conditional value (e.g., 612). In an example, the conditional value may be a field value that depends on a condition set on another field. When there are multiple conditions set, a last condition in the list that matches may be be picked up for the value. As shown in FIG. 6B, a field 'text area' 604 may possess a mandatory nature on the form depending upon the condition mentioned on other field/fields. Further, a user can select the required 'yes' or 'no', and select a condition.

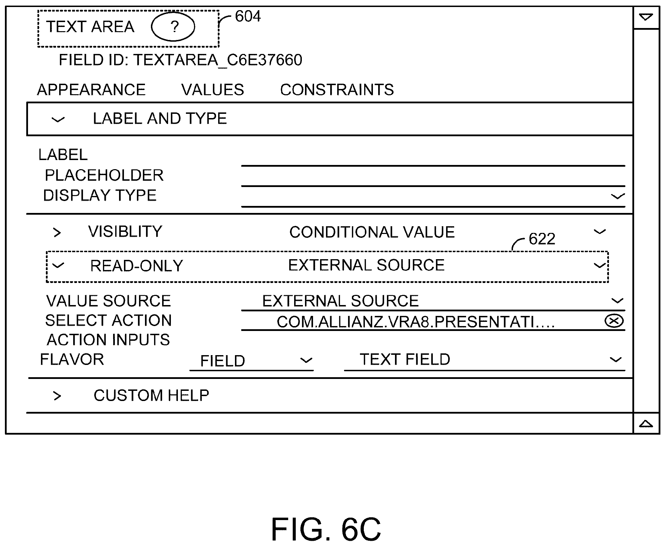

FIG. 6C is an example graphical user interface 600C depicting an external source (e.g., 622). In an example, external source 622 may be a special dependency, where value to a field is requested from an external entity such as vRealize Orchestrator (vRO). The vRO may include actions which are made up of small piece of JavaScript code to carry out some operation. These vRO actions are exported to Aria Automation so that the same could be requested to be invoked from Aria Automation remotely. This feature of getting values into a field from external entity is termed as external source 622 in Aria Automation. As shown in FIG. 6C, a field 'text area' 604 may depend for its read-only vs writable nature on an external source call to vRO taking text field as input. Further, the returned value may decide whether the field 'text area' 604 may be read-only or editable on the form. Furthermore, a call by external source 622 to vRO may return 'yes' or 'no', and hence Aria Automation presents those actions in external source 622 call section which may return the supported return type as Boolean.

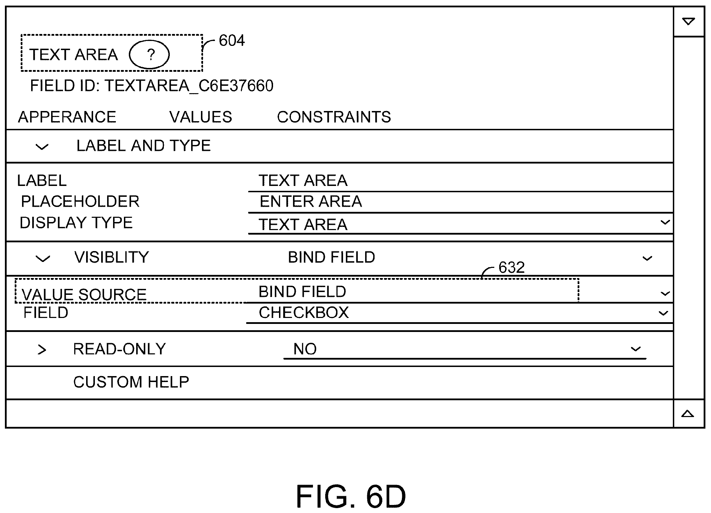

FIG. 6D is an example graphical user interface 600D depicting a binding field (e.g., 632). In an example, binding field 632 option may enable the user to replicate the value provided in one field into the other field. Binding field 'A' to field 'B' may replicate value of 'B' into 'A' provided that their datatype matches. As shown in FIG. 6D, field 'text area' 604 may have a visibility dependency on field 'checkbox' through a bind field condition. In other words, the visibility of field 'text area' 604 (which may be yes/no) may depend upon the value set to the field 'checkbox'. In this example, the visibility of the field may either be yes or no. Further, the bind field may have to be of a Boolean type and hence the 'checkbox'. In an example scenario of Aria Automation, a restriction may be imposed in the user interface itself so that the user may not be able to select any other field with different datatype.

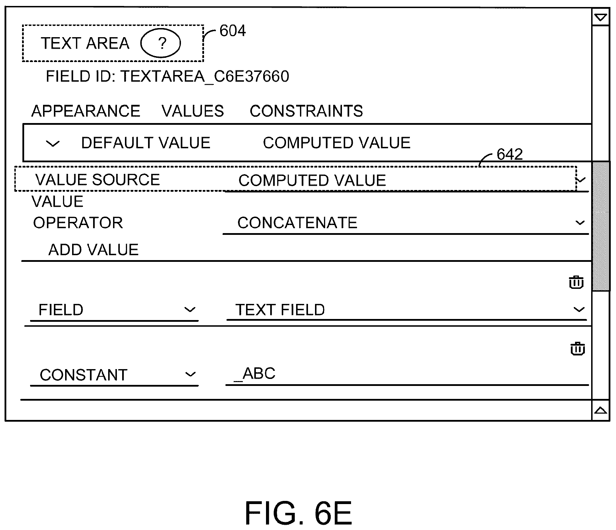

FIG. 6E is an example graphical user interface 600E depicting a computed value (e.g., 642). In an example, computed value 642 is a value, which is a result of some operations on one or multiple combinations of constants and/or other selected fields. For string type of datatypes, the supported operator is concatenate and for number types, the supported operators are addition, subtraction, and multiplication. As shown in FIG. 6E, a field 'text area' may be computed value 642 dependency for its value on field 'text field'. The calculation of value for 'text area' may be a concatenate value for 'text field' and string '_ABC'. Thus, one can have formation of value out of multiple fields, multiple constants, or combination of constants and fields. Concatenate may be an operator for string type of fields. It may be changed to add, subtract, or multiply if it is an integer type.

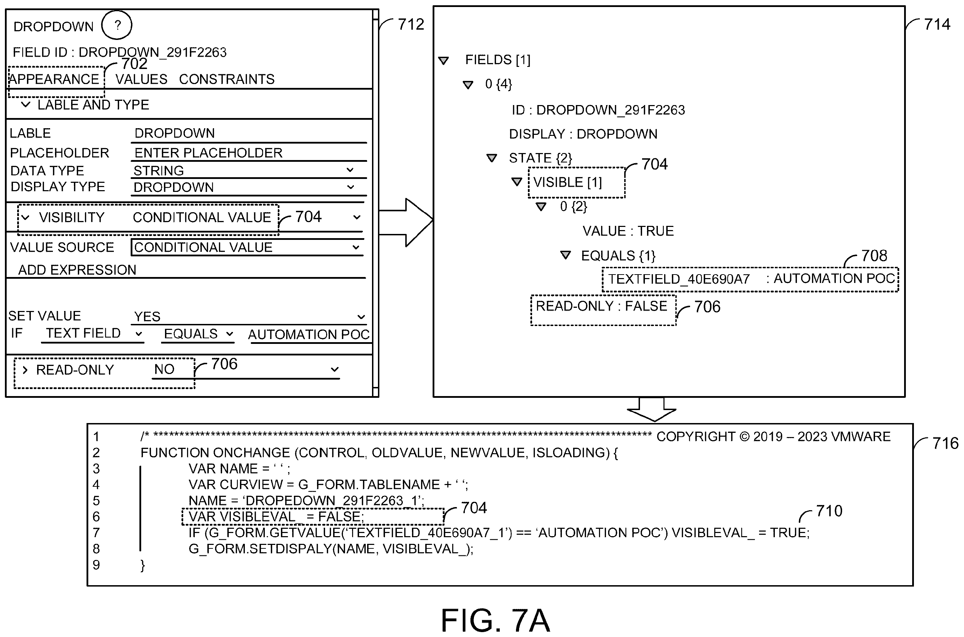

FIG. 7A shows an example client script generated for form field including visibility (e.g., 704) and read-write (e.g., 706) options (e.g., of appearance 702) on Aria Automation platform. FIG. 7A depicts a first form 712 associated with Aria Automation platform for , a custom form schema including a form field 714 (i.e., a catalog item), and a client script 716 generated for the form field 714. As shown in FIG. 7A, appearance 702 of field drop down may be conditionally dependent upon value in the field 'text field' in such a way that drop down may be visible whenever 'text field' has value 'automation POC' (e.g., 708). Further, FIG. 7A depicts ServiceNow catalog client script 716 generated dynamically that checks the value present in 'text field' if it is 'automation POC' and sets the visibility of the field as 'true' (e.g., 710).

In an example, a custom form field 712 on Aria Automation allows setting visibility 704, read-write 706, and help properties of a field. Visibility 704 of the field may result in whether the field will be shown on the form or will it be hidden. Further, Aria automation supports setting this visibility property of the field through a constant value, conditional value, external source, or bind field. Similarly, read-only 706 of the field may result in whether the field will be editable on the form, or it will be read-only. Furthermore, Aria automation supports setting this read-only property of the field through a constant value, conditional value, or external source. Further, Aria automation provides a help section on appearance tab to provide an option to set a help message to understand the significance of the field.

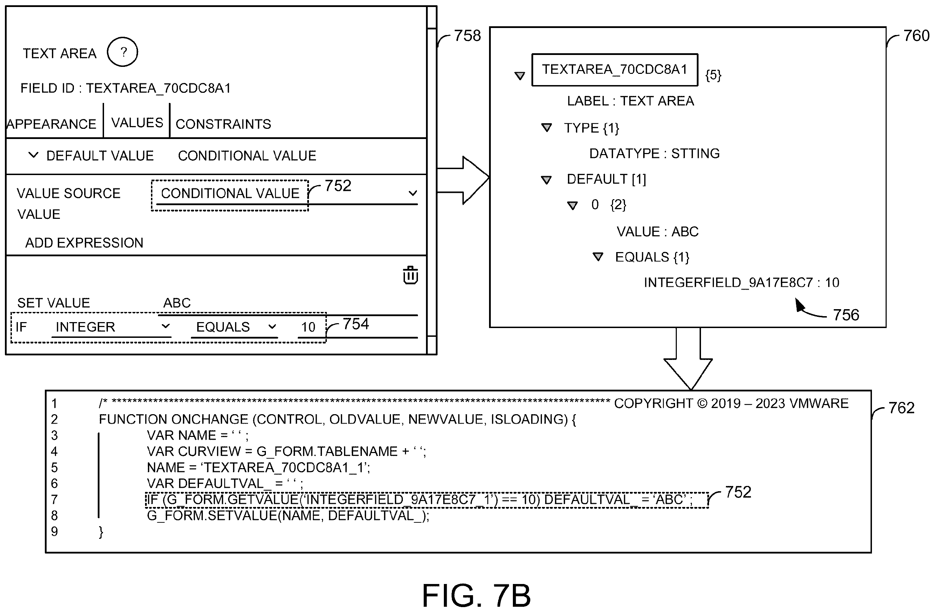

FIG. 7B shows an example simple conditional value type (e.g., 752) on Aria Automation platform. As shown in FIG. 7B, Aria automation custom form 758 for a field named 'text area' with a dependency on field named 'integer' for its value to be 'abc' whenever integer is `10' (e.g., 754). Further, FIG. 7B depicts REST API JSON schema 760 for the dependency (e.g., 756). Furthermore, FIG. 7B depicts ServiceNow catalog client script 762 to handle the dependency such that whenever integer field will have a value as 10, 'text field' may be set with a value 'abc' (e.g., 752).

In an example, values on Aria Automation may allow different mechanisms to set the default value to the property when it gets loaded on the form. It supports getting a value as a constant, conditional value, external source, bind field, and computed value. Further, to get value from everything except constant, an integration plugin may have to write a dynamic catalog client script depending upon the type selected. For example, a constant value may be either specified already or one can later specify on the form. A conditional value may be based on a condition set on another field. If there are multiple conditions set, a last condition in the list that matches may decide the value. An external source value may be set as per the response received for an external call to vRO action. A bind field clones the value from another field that is bound to this field. A computed value may calculate the value on the basis of some basic operations like concatenate for string and add, subtract and multiply on integer.

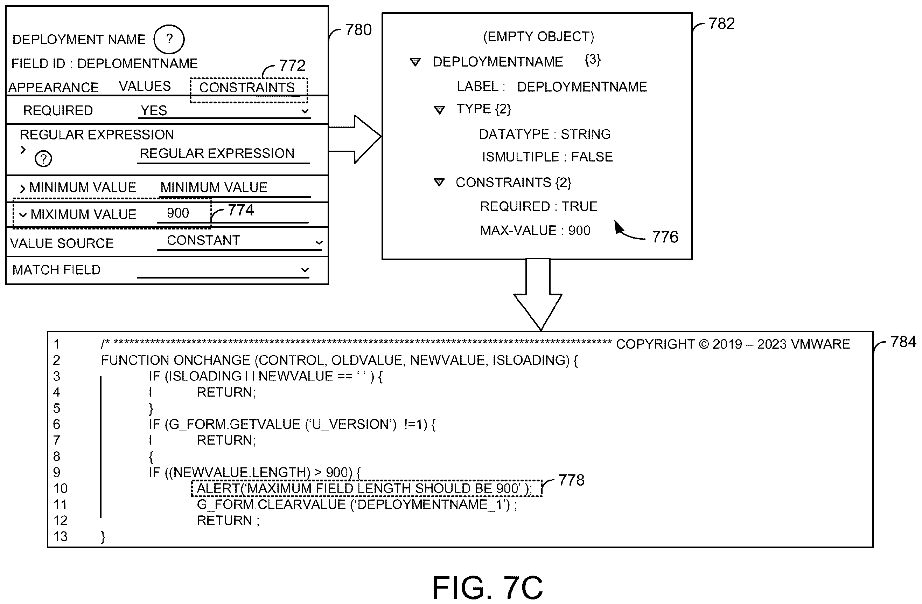

FIG. 7C shows an example constraint (e.g., maximum length validation on a string type of property, 772) on Aria Automation platform. FIG. 7C shows constraint on Aria Automation custom form 780 for a field deployment name to restrict a maximum length of a value to 900 (e.g., 774). Further, FIG. 7C shows respective schema 782 received by ServiceNow ITSM through REST API call (e.g., 776). Furthermore, FIG. 7C depicts dynamically written catalog client script 784 at ServiceNow restricting the value of the field to 900 on the event of 'onchange' on this field (e.g., 778). In an example, constraints 772 on Aria Automation may impose restrictions on the value provided into the property. The supported constraints may include regular expression validation, minimum value, and maximum value support.

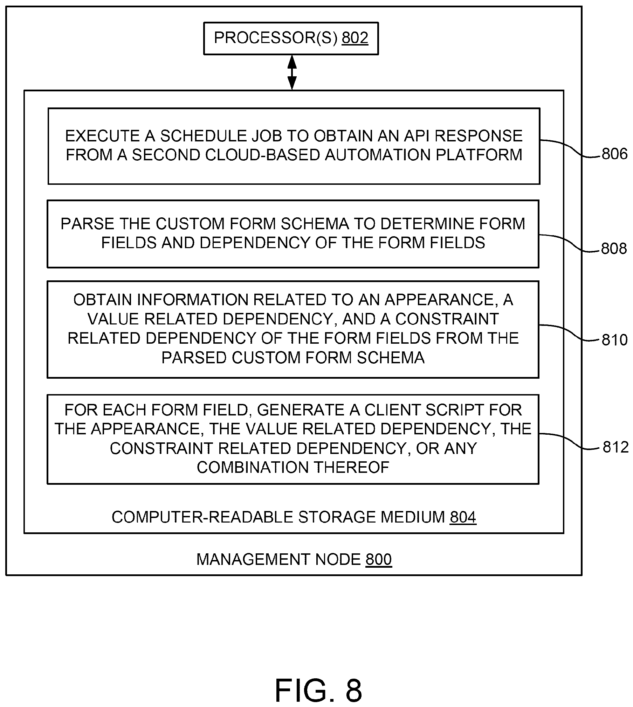

FIG. 8 is a block diagram of an example management node 800 including non-transitory computer-readable storage medium 804 storing instructions to generate a script for integrating functionalities of a first cloud-based automation platform and a second cloud-based automation platform. Management node 800 may include a processor 802 and computer-readable storage medium 804 communicatively coupled through a system bus. Processor 802 may be any type of central processing unit (CPU), microprocessor, or processing logic that interprets and executes computer-readable instructions stored in computer-readable storage medium 804. Computer-readable storage medium 804 may be a random-access memory (RAM) or another type of dynamic storage device that may store information and computer-readable instructions that may be executed by processor 802. For example, computer-readable storage medium 804 may be synchronous DRAM (SDRAM), double data rate (DDR), Rambus^{®} DRAM (RDRAM), Rambus^{®} RAM, etc., or storage memory media such as a floppy disk, a hard disk, a CD-ROM, a DVD, a pen drive, and the like. In an example, computer-readable storage medium 804 may be a non-transitory computer-readable medium. In an example, computer-readable storage medium 804 may be remote but accessible to management node 800.

Computer-readable storage medium 804 may store instructions 806, 808, 810, and 812. Instructions 806 may be executed by processor 802 to execute, via an integration plugin installed on a first cloud-based automation platform running in the first management node, a schedule job to obtain an application programming interface (API) response from a second cloud-based automation platform. In an example, the API response may include a custom form schema of a first form associated with the second cloud-based automation platform.

Instructions 808 may be executed by processor 802 to parse the custom form schema to determine form fields and dependency of the form fields. Instructions 810 may be executed by processor 802 to obtain information related to an appearance, a value related dependency, and a constraint related dependency of the form fields from the parsed custom form schema.

For each form field, instructions 812 may be executed by processor 802 to generate one or more client scripts for the appearance, the value related dependency, the constraint related dependency, or any combination thereof for loading a second form associated with the first cloud-based automation platform.

Computer-readable storage medium 804 may store instructions to persist the one or more client scripts associated with each form field in a database associated with the first cloud-based automation platform by making a platform call that enables the integration plugin to interact with the database.

Further, computer-readable storage medium 804 may store instructions to present, via a user interface associated with the first cloud-based automation platform, the second form using the persisted one or more client scripts. In an example, the second form may provide a capability of recording a change event and trigger an action on the form depending upon the change event by dynamically executing the one or more client scripts.

In an example, in the event of loading a form field of the second form or a change of a value of the form field of the second form, computer-readable storage medium 804 may store instructions to retrieve the client script associated with the form field and execute the retrieved client script to populate a default value in the form field, populate a value based on the value related dependency of the form field, apply a rule to the form field, or a combination thereof.

Further, computer-readable storage medium 804 may store instructions to:
- execute the client script for the appearance of the form field to provide an appearance of the form field in the second form;
- execute the client script for the value related dependency to populate a value in a first form field that is dependent on a second form field in an event of change of a value of the second form field or to populate a default value in the form field during loading of the form field;
- execute the client script for the constraint related dependency to apply a validation rule on the value provided in the form field; or
- any combination thereof.

In an example, prior to parsing the custom form schema, computer-readable storage medium 804 may store instructions to delete a previous version of the first form associated with the second cloud-based automation platform and associated client scripts from a database associated with the first cloud-based automation platform.

The above-described examples are for the purpose of illustration. Although the above examples have been described in conjunction with example implementations thereof, numerous modifications may be possible without materially departing from the teachings of the subject matter described herein. Other substitutions, modifications, and changes may be made without departing from the spirit of the subject matter. Also, the features disclosed in this specification (including any accompanying claims, abstract, and drawings), and any method or process so disclosed, may be combined in any combination, except combinations where some of such features are mutually exclusive.

The terms "include," "have," and variations thereof, as used herein, have the same meaning as the term "comprise" or appropriate variation thereof. Furthermore, the term "based on", as used herein, means "based at least in part on." Thus, a feature that is described as based on some stimulus can be based on the stimulus or a combination of stimuli including the stimulus. In addition, the terms "first" and "second" are used to identify individual elements and may not meant to designate an order or number of those elements.

The present description has been shown and described with reference to the foregoing examples. It is understood, however, that other forms, details, and examples can be made without departing from the spirit and scope of the present subject matter that is defined in the following claims.

## Claims

1. A method, comprising:
executing, using an integration plugin installed on a first cloud-based automation platform running in a first management node, a schedule job to obtain an application programming interface (API) response from a second management node executing a second cloud-based automation platform, the API response comprising a custom form schema of a first form associated with the second cloud-based automation platform in a first defined data format;
parsing, using the integration plugin, the custom form schema to determine form fields and dependency of the form fields;
translating, using the integration plugin, the custom form schema into a second defined data format supported by the first cloud-based automation platform based on the parsed custom form schema; and
persisting, using the integration plugin, the translated custom form schema in a database associated with the first cloud-based automation platform.

2. The method of claim 1, further comprising:
presenting, via a user interface associated with the first cloud-based automation platform, a second form using the persisted custom form schema in the second defined data format, wherein the second form is to provide a capability of recording a change event and trigger an action on the second form depending upon the change event based on the translated custom form schema.

3. The method of claim 2, further comprising:
enabling to perform the management functions of the second cloud-based automation platform through the first cloud-based automation platform using the second form, wherein the second form is used to submit information, a request, or to create a task corresponding to the second cloud-based automation platform.

4. The method of claim 2 or 3, wherein translating the custom form schema into the second defined data format comprises:
programmatically generating a client script for an appearance of a form field in the second form, a value related dependency of the form field in the second form, a constraint related dependency of the form field in the second form, or any combination thereof.

5. The method of any one of the claims 2 to 4, wherein translating the custom form schema into the second defined data format comprises:
programmatically generating a client script for an appearance of each form field, wherein the client script, when executed, is to provide an appearance of a form field in the second form.

6. The method of any one of the claims 2 to 5, wherein translating the custom form schema into the second defined data format comprises:
programmatically generating a client script for each dependency of the form fields, wherein the client script, when executed, is to populate a value in a first form field that is dependent on a second form field in an event of change of a value of the second form field.

7. The method of any one of the claims 2 to 6, wherein translating the custom form schema into the second defined data format comprises:
programmatically generating a client script for each form field, wherein the client script, when executed, is to populate a default value in a form field in an event of loading of the second form.

8. The method of any one of the claims 1 to 7, the method comprising at least one of the following features:
(A) the dependency of the form fields comprises:
a dependency of one form field on another form field for a value;
a dependency of a form field to get a default value on loading of the form field;
a dependency of one form field on another form field for visibility;
a dependency of one form field on another form field for making the form field read-only;
a dependency of one form field's mandatory nature on a value of another form field;
a dependency of a form field to get a value from an external source; or
a validation on the value provided into the form field; and
(B) the custom form schema comprises information indicating an appearance of the fields on the form, value of the fields, constraint for the fields, and dependencies of the fields.

9. A management node comprising:
a processor;
memory coupled to the processor;
a first cloud-based automation platform running in the memory;
an integration plugin installed on the first cloud-based automation platform to:
execute a schedule job to obtain an application programming interface (API) response from a second cloud-based automation platform, the API response comprising a custom form schema of a first form associated with the second cloud-based automation platform in a first data format;
parse the custom form schema to determine form fields and dependency of the form fields;
obtain information related to an appearance, a value related dependency, and a constraint related dependency of the form fields from the parsed custom form schema; and
for each form field,
generate a client script for the appearance, the value related dependency, the constraint related dependency, or any combination thereof.

10. The management node of claim 9, wherein the integration plugin is to:
persist the client script associated with each form field in a database associated with the first cloud-based automation platform by making a platform call that enables the integration plugin to interact with the database.

11. The management node of claim 10, wherein the integration plugin is to:
present, via a user interface associated with the first cloud-based automation platform, a second form by dynamically executing the client script associated with each form field in an event of loading the second form or a change of a value of a form field of the second form.

12. The management node of claim 11, comprising at least one of the following features:
(A) the integration plugin is to:
in the event of loading the form field of the second form or a change of a value of the form field of the second form,
retrieve the client script associated with the form field; and
execute the retrieved client script to populate a default value in the form field, populate a value based on the value related dependency of the form field,
apply a rule to the form field, or a combination thereof;
and
(B) the integration plugin is to:
execute the client script for the appearance of the form field to provide an appearance of the form field in the second form;
execute the client script for the value related dependency to populate a value in a first form field that is dependent on a second form field in an event of change of a value of the second form field or to populate a default value in the form field during loading of the form field;
execute the client script for the constraint related dependency to apply a validation rule on the value provided in the form field; or
any combination thereof.

13. A non-transitory computer readable storage medium storing instructions executable by a processor of a first management node to:
execute, via an integration plugin installed on a first cloud-based automation platform running in the first management node, a schedule job to obtain an application programming interface (API) response from a second cloud-based automation platform, the API response comprising a custom form schema of a first form associated with the second cloud-based automation platform;
parse the custom form schema to determine form fields and dependency of the form fields;
obtain information related to an appearance, a value related dependency, and a constraint related dependency of the form fields from the parsed custom form schema; and
for each form field,
generate one or more client scripts for the appearance, the value related dependency, the constraint related dependency, or any combination thereof for loading a second form associated with the first cloud-based automation platform.

14. The non-transitory computer readable storage medium of claim 13, further comprising instructions to:
persist the one or more client scripts associated with each form field in a database associated with the first cloud-based automation platform by making a platform call that enables the integration plugin to interact with the database.

15. The non-transitory computer readable storage medium of claim 14, further comprising at least one of the following features:
(A) further comprising instructions to:
present, via a user interface associated with the first cloud-based automation platform, the second form using the persisted one or more client scripts, wherein the second form is to provide a capability of recording a change event and trigger an action on the form depending upon the change event by dynamically executing the one or more client scripts;
(B) further comprising instructions to:
in the event of loading a form field of the second form or a change of a value of the form field of the second form,
retrieve the client script associated with the form field; and
execute the retrieved client script to populate a default value in the form field, populate a value based on the value related dependency of the form field, apply a rule to the form field, or a combination thereof;
(C) further comprising instructions to:
execute the client script for the appearance of the form field to provide an appearance of the form field in the second form;
execute the client script for the value related dependency to populate a value in a first form field that is dependent on a second form field in an event of change of a value of the second form field or to populate a default value in the form field during loading of the form field;
execute the client script for the constraint related dependency to apply a validation rule on the value provided in the form field; or
any combination thereof;
and
(D) further comprising instructions to:
prior to parsing the custom form schema, delete a previous version of the first form associated with the second cloud-based automation platform and associated client scripts from a database associated with the first cloud-based automation platform.
